# EUROPÄISCHE PATENTSCHRIFT

(11) **EP 2 899 043 B1**
(45) Veröffentlichungstag und Bekanntmachung des Hinweises auf die Patenterteilung: **10.01.2018**
(21) Anmeldenummer: 14152197.1
(22) Anmeldetag: 22.01.2014
(51) Int. Cl.: B60G 11/30, B60G 9/00

(54) **Kolbenspeicher, Fahrzeugachse und Fahrzeug-Federungssystem mit einem derartigen Kolbenspeicher**
Piston accumulator, vehicle axle and vehicle suspension system with such a piston accumulator
Accumulateur à piston, essieu de véhicule et système de suspension de véhicule doté d'un tel accumulateur à piston

(43) Veröffentlichungstag der Anmeldung: 29.07.2015
(73) Patentinhaber: Hemscheidt Fahrwerktechnik GmbH & Co. KG, 42781 Haan-Gruiten (DE)
(72) Erfinder: Wöhrmann, Mark, Dr.-Ing., 40723 Hilden (DE); Naploszek, Hartwig, 45289 Essen (DE)
(74) Vertreter: Patent- und Rechtsanwälte Dr. Solf & Zapf

(56) Entgegenhaltungen:
- EP-A1- 1 500 531
- DE-A1-102012 203 829
- DE-B- 1 087 466
- US-A1- 2003 132 626
- US-A1- 2004 251 653

## Beschreibung

Die vorliegende Erfindung betrifft einen hydropneumatischen Kolbenspeicher, insbesondere für Fahrzeug-Federungssysteme, umfassend ein Speichergehäuse und einen im Speichergehäuse in Richtung einer Gehäuselängsachse verschiebbar geführten Trennkolben, der im Gehäuse einen Speicherraum für ein hydraulisches Medium von einem ein Federelement, insbesondere ein kompressibles Medium, enthaltenden Druckraum trennt sowie Füllöffnungen für das Medium oder die beiden Medien. Die Erfindung betrifft ferner eine Fahrzeugachse mit einem derartigen Kolbenspeicher und ein Fahrzeug-Federungssystem mit einer derartigen Fahrzeugachse. Die Fahrzeugachse dient insbesondere als Fahrzeugachse für Trailer.

Ein derartiger hydropneumatischer Kolbenspeicher ist z. B. aus der DE 20 2009 018 583 U1 bekannt. Ein derartiger Kolbenspeicher hat den Nachteil, dass zusätzlicher Bauraum im Achsbereich erforderlich ist und durch diesen zusätzlichen Kolbenspeicher das Fahrzeuggewicht erhöht wird. Zudem erhöhen sich durch den zusätzlichen Kolbenspeicher die Herstellungskosten des Fahrzeugs.

Die US 2003/0132626 A1 offenbart die Anordnung von Aufhängungskomponenten innerhalb eines rohförmigen Rahmenbauteils, insbesondere einer Motoraufhängung. Beispielsweise kann innerhalb des Rahmenbauteils ein Kolben geführt sein, der einseitig mit einem Gas und andernseitig mit einem Fluid beaufschlagt wird.

Die DE 10 2012 203 829 A1 offenbart die Anordnung eines Nehmerzylinders in einem Hohlraum eines Lenkers, wobei der Lenker gelenkig mit einem Radträger verbunden ist. Der Nehmerzylinder weist einen zweifachwirkenden Kolben auf, der eine erste und eine zweite Kammer voneinander trennt, wobei die erste Kammer des Nehmerzylinders mit dem Geberzylinder verbunden ist und mit einem Fluid befüllt ist. Der Nehmerzylinder weist zudem eine Dämpfungseinrichtung mit einem hydraulischen Dämpfer oder einem Luftdämpfer und/oder einer mechanischen Federeinrichtung auf.

Die DE 1 087 466 offenbart, dass innerhalb einer Fahrzeugachse ein Luftpolster und gleichzeitig in demselben Raum ein Hydraulikmedium angeordnet sind.

Der vorliegenden Erfindung liegt die Aufgabe zu Grunde, einen Kolbenspeicher zur Verfügung zu stellen, der keinen zusätzlichen Platzbedarf im Achsbereich erfordert und durch den das Fahrzeuggewicht im Wesentlichen nicht erhöht wird. Weitere Aufgaben sind die Bereitstellung einer Fahrzeugachse mit einem derartigen Kolbenspeicher und eines Fahrzeug-Federungssystem mit einer derartigen Fahrzeugachse.

Diese Aufgaben werden durch einen Kolbenspeicher mit den Merkmalen von Anspruch 1, eine Fahrzeugstarrachse mit den Merkmalen von Anspruch 4 und ein Fahrzeug-Federungssystem mit den Merkmalen von Anspruch 13 gelöst. Weitere vorteilhafte Ausführungen sind in den Unteransprüchen enthalten.

Erfindungsgemäß wird dies ausgehend von dem eingangs genannten Stand der Technik dadurch erreicht, dass das Speichergehäuse als Achskörper einer Fahrzeugstarrachse mit einer im Querschnitt kreisförmigen Innenbohrung ausgebildet ist, wobei in der Innenbohrung der Trennkolben angeordnet ist.

Zudem wird dies durch eine Fahrzeugstarrachse mit dem eine Längsachse aufweisenden Achskörper erreicht, wobei der Achskörper ein Achsrohr mit der im Querschnitt kreisförmigen Innenbohrung aufweist. Erfindungsgemäß weist der Achskörper zumindest einen, vorzugsweise zwei, Kolbenspeicher auf, wobei der Kolbenspeicher das Speichergehäuse sowie den Trennkolben aufweist. Das Speichergehäuse weist einen Gehäusezylinderraum auf und der Trennkolben ist innerhalb des Gehäusezylinderraumes hin- und her verschieblich geführt und trennt den Gehäusezylinderraum in den Speicherraum für das hydraulische Medium und den ein, insbesondere pneumatisches Federelement, enthaltenden Druckraum. Der Trennkolben ist erfindungsgemäß innerhalb der Innenbohrung des Achsrohrs verschieblich geführt.

Der Gehäusezylinderraum wird dadurch erfindungsgemäß durch einen Innenbohrungsabschnitt der Innenbohrung des Achsrohrs gebildet.

Und das Speichergehäuse wird zumindest teilweise durch das Achsrohr, insbesondere eine Rohrwandung des Achsrohrs, gebildet bzw. ist Teil des Achsrohrs. Bzw. das Achsrohr, insbesondere die Rohrwandung des Achsrohrs, bildet erfindungsgemäß einen Teil des Speichergehäuses des Kolbenspeichers.

Die Erfindung basiert auf der Erkenntnis, dass die sowieso im Fahrzeug vorhandene Fahrzeugstarrachse zur Aufnahme des Trennkolbens genutzt wird und zur Ausbildung der beiden Räume für das hydraulische Medium und für das kompressible Medium, so dass keine zusätzlichen Bauteile erforderlich sind. Darüber hinaus eignet sich die Fahrzeugstarrachse auch deshalb zur erfindungsgemäßen Ausgestaltung, da sie keinen Torsionsbeanspruchungen mehr unterliegt. Zudem basiert die vorliegende Erfindung auf der Erkenntnis, dass der Achskörper hinreichend steif ausgebildet werden kann, so dass eine ungehinderte Längsverschiebbarkeit des Trennkolbens innerhalb des Achskörpers gewährleistet ist.

Weiterhin betrifft die Erfindung ein Fahrzeugfederungssystem, umfassend mindestens einen Teleskop-Federzylinder, wobei der Teleskop-Federzylinder einen Hohlzylinder aufweist, in dem in der Zylinderlängsachse ein Kolben verschiebbar geführt ist, der eine umfangsgemäß abgedichtete, aus dem Hohlyzylinder herausgeführte Kolbenstange aufweist, wobei der Kolben einen Zylinderraum von einem die Kolbenstange umschließenden Ringraum abtrennt, sowie einen hydropneumatischen Kolbenspeicher, der erfindungsgemäß entsprechend dem kennzeichnenden Teil des Anspruchs 1 ausgebildet ist.

Weitere vorteilhafte Ausführungen sind in den Unteransprüchen enthalten und werden anhand des in den beiliegenden Zeichnungen dargestellten Ausführungsbeispiels näher erläutert.

### Es zeigen:

- Fig. 1: eine Ansicht eines erfindungsgemäßen Fahrzeugfederungssystems mit einem hydropneumatischen Kolbenspeicher gemäß der Erfindung im Längsschnitt durch den erfindungsgemäßen Achskörper,
- Fig. 2: eine perspektivische Ansicht von Fig. 1,
- Fig. 3: eine perspektivische Teilansicht des erfindungsgemäßen Fahrzeugfederungssystems mit einem Teleskop-Federzylinder im Längsschnitt
- Fig. 4: eine perspektivische Ansicht des erfindungsgemäßen Fahrzeugfederungssystems mit Kreuzverschaltung
- Fig. 5: eine perspektivische Ansicht des erfindungsgemäßen Fahrzeugfederungssystems mit Kreuzverschaltung nach einer weiteren Ausführungsform.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des Ausführungsbeispiels auch losgelöst von allen anderen im Zusammenhang damit beschriebenen Teilmerkmalen für sich und auch in Kombination mit beliebigen Merkmalen des anderen Ausführungsbeispiels von Bedeutung für den Gegenstand der Erfindung.

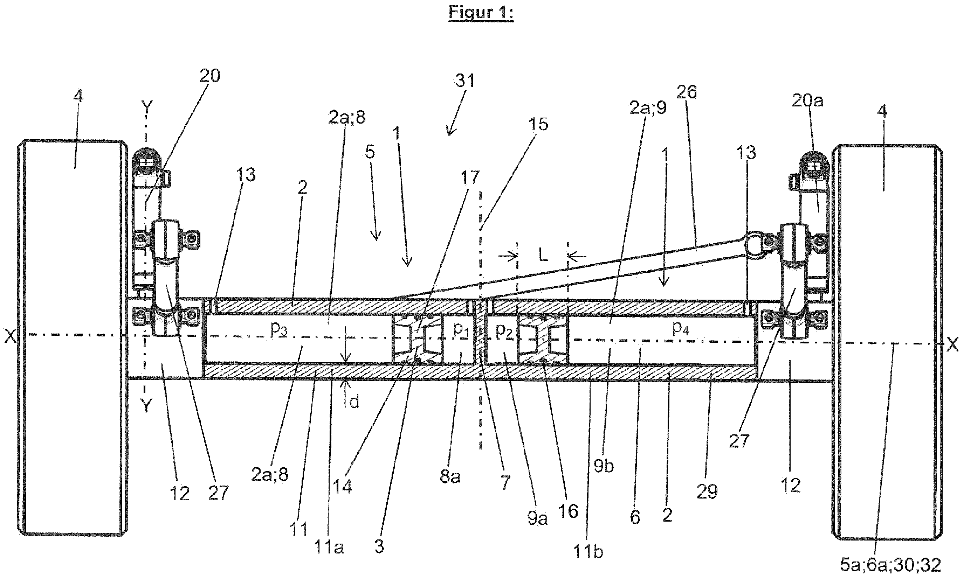

Ein erfindungsgemäßer hydropneumatischer Kolbenspeicher 1 (Fig. 1-5) besteht aus einem Speichergehäuse 2 und einem im Speichergehäuse 2 in Richtung einer Gehäuselängsachse X-X hin- und her verschiebbar geführten Trennkolben 3. Das Speichergehäuse 2 weist einen inneren Gehäusezylinderraum 2a auf, innerhalb welchem der Trennkolben 3, insbesondere freischwimmend, angeordnet ist. Der Gehäusezylinderraum 2a weist eine Zylinderachse 32 auf, welche der Gehäuselängsachse X-X entspricht. Erfindungsgemäß ist das Speichergehäuse 2 als Teil eines Fahrzeugachskörpers 5 einer Fahrzeugstarrachse 31 ausgebildet, der zwei gegenüberliegende Fahrzeug-Räder 4 verbindet.

Der länglich ausgebildete Fahrzeugachskörper 5 weist eine Längsachse 5a auf, welche der Drehachse der an dem Achskörper 5 zu befestigenden Fahrzeug-Räder 4 entspricht. Zudem weist der Fahrzeugachskörper 5 ein Achsrohr 11 mit einer Rohrwandung 29 auf, dessen mittige Rohrlängsachse 30 koaxial zur Längsachse 5a und koaxial zur Gehäuselängsachse X-X ist. Der Fahrzeugachskörper 5, insbesondere das Achsrohr 11, weist eine im Querschnitt kreisförmige Innenbohrung bzw. Innenaussparung 6 auf, deren Bohrungsachse 6a koaxial zur Rohrlängsachse 30 ist.

Im dargestellten ersten Ausführungsbeispiel (Fig. 1-4) ist die im Querschnitt kreisförmige Innenbohrung 6 durch ein Zwischenwandelement 7 in zwei Teilräume unterteilt, die jeweils einen im Querschnitt kreisförmigen Innenbohrungsabschnitt 8;9 der Innenbohrung 6 bilden. Zudem teilt das Zwischenwandelement 7 das Achsrohr 11 in zwei Achsrohrabschnitte 11a;11b. Die beiden Innenbohrungsabschnitte 8;9 und Achsrohrabschnitte 11a;11b sind jeweils durch das Zwischenwandelement 7 fluidtechnisch voneinander getrennt. Jeder der Achsrohrabschnitte 11a;11b weist dabei einen der beiden Innenbohrungsabschnitte 8;9 auf. Jeweils ein Innenbohrungsabschnitt 8;9 bzw. Achsrohrabschnitt 11a;11b liegt zudem auf einer anderen Seite einer Mittenebene 15. Die Mittenebene 15 ist senkrecht zur Längsachse 5a und mittig in Bezug zur Längserstreckung des Achskörpers 5 angeordnet. Vorzugsweise ist der Achskörper 5 symmetrisch zur Mittenebene 15 ausgebildet.

In jedem der beiden Innenbohrungsabschnitte 8;9 ist jeweils ein Trennkolben 3 derart angeordnet, dass er in Richtung der Längsachse 5a des Achskörpers 5 bzw. der Rohrlängsachse 30 hin- und her verschiebbar geführt ist und zudem umfangsgemäß abgedichtet ist. Die Fahrzeugstarrachse 31 weist in diesem Fall zwei erfindungsgemäße Kolbenspeicher 1 auf. Die Rohrwand 29 bildet dabei jeweils einen Teil des Speichergehäuses 2 jedes Kolbenspeichers 1. Und das Speichergehäuse 2 jedes Kolbenspeichers 1 ist erfindungsgemäß jeweils als Teil des Achskörpers 5 ausgebildet. Der Trennkolben 3 des ersten Innenbohrungsabschnitts 8 unterteilt den Innenbohrungsabschnitt 8 in einen Speicherraum 8a für ein hydraulisches Medium und einen Druckraum 8b, in den ein kompressibles Medium einfüllbar bzw. eingefüllt ist. Entsprechend unterteilt der Trennkolben 3 den zweiten Innenbohrungsabschnitt 9 in einen Speicherraum 9a für ein hydraulisches Medium und in einen Druckraum 9b zum Befüllen mit einem kompressiblen Medium. Jeder Innenbohrungsabschnitt 8;9 bildet infolgedessen den Gehäusezylinderraum 2a des Speichergehäuses 2.

Das Achsrohr 11 besteht aus Metall, insbesondere Stahl. Zudem wird der Achskörper 5 vorzugsweise aus zwei einzelnen, jeweils einseitig durch eine Bodenwandung verschlossenen Hohlzylindern bzw. Rohren hergestellt. Diese werden mit ihren Bodenwandungen gegeneinander gesetzt und die Bodenwandungen miteinander verschweißt oder anderweitig fest miteinander verbunden. Die beiden Bodenwandungen bilden dann das Zwischenwandelement 7.

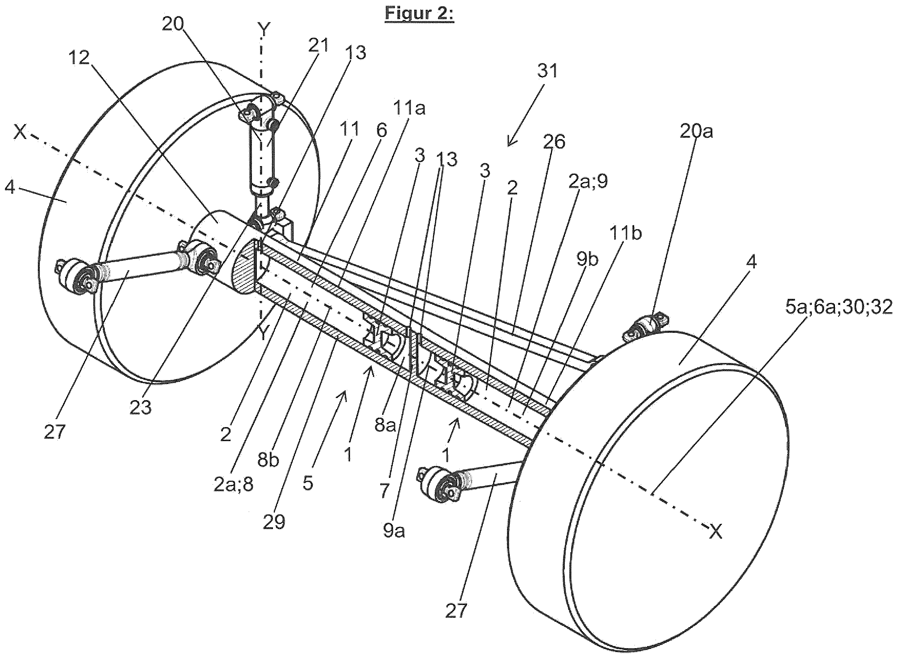

Weiterhin ist vorzugsweise vorgesehen, dass der Achskörper 5 endseitig, also an seinen beiden freien, radseitigen Achskörperenden, durch Verschlusskappen 12 verschlossen ist (Fig. 1 und 2). Die Verschlusskappen 12 verschließen die Innenbohrung 6 bzw. die Innenbohrungsabschnitte 8;9 druck- und mediendicht. Vorzugsweise sind diese Verschlusskappen 12 mit dem Achsrohr 11 an dessen beiden freien Rohrenden lösbar verbunden. An den Verschlusskappen 12 sind vorzugsweise Achszapfen oder andere Befestigungsmittel befestigt, die zur Lagerung der Fahrzeug-Räder 4 dienen.

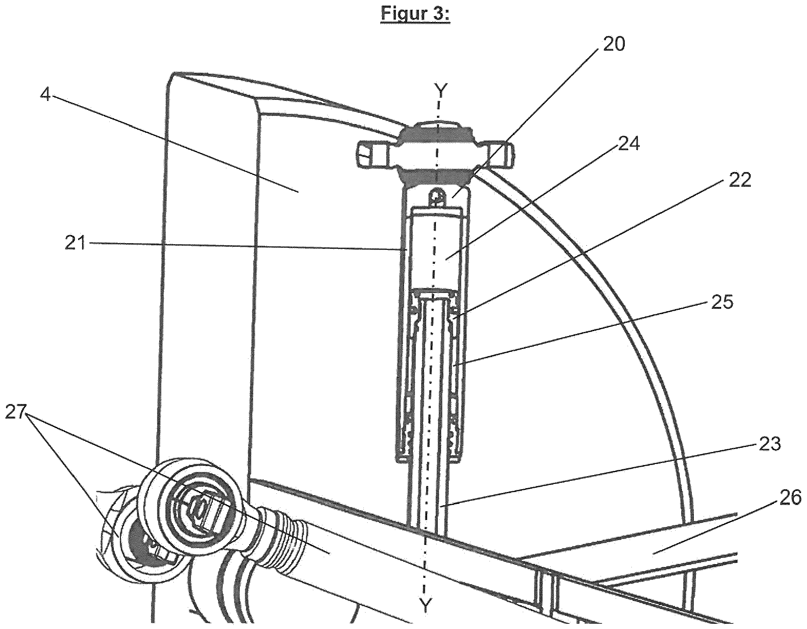

Anstelle der Verschlusskappen 12 kann die Innenbohrung 6 bzw. können die Innenbohrungsabschnitte 8;9 auch durch andere Mittel bzw. Einrichtungen druck- und mediendicht verschlossen sein. Insbesondere können Achsstummel 28 vorhanden sein (Fig. 3-5). Die Achsstummel 28 dienen als Verschlussstöpsel. Die Achsstummel 28 ragen jeweils teilweise in die Innenbohrung 6 hinein und verschließen diese druck- und mediendicht. Die aus der Innenbohrung 6 heraus ragenden Achszapfen der Achsstummel 28 dienen als Radlager. Die Achsstummel 28 sind beispielsweise in die Innenbohrung 6 eingeschraubt und somit lösbar mit dem Achsrohr 11 verbunden. Alternativ dazu können die Achsstummel 28 auch mit dem Achsrohr 11 verschweißt sein, also unlösbar mit diesem verbunden sein.

Weiterhin ist zu erkennen, dass in dem als Achskörper 5 ausgebildeten Speichergehäuse 2, insbesondere in der Rohrwandung 29 des Achsrohres 11, Füllöffnungen 13 zum Befüllen der Räume 8a;8b;9a:9b ausgebildet sind.

Wie in den Zeichnungen zu erkennen ist, ist es erfindungsgemäß von Vorteil, wenn jeder der Trennkolben 3 im Längsschnitt gesehen die Form eines Doppel-T besitzt, wobei in dem Umfang des waagerechten T-Schenkels 14 Nuten zur Aufnahme von Umfangsdichtungen 16 angeordnet sind und der senkrechte T-Schenkel 17 eine Kolbentrennwand bildet. Vorzugsweise sind die erfindungsgemäßen Trennkolben 3 derart dimensioniert, dass ihre Kolbenlänge L, also deren Erstreckung in Richtung der Gehäuselängsachse X-X, größer/gleich dem Innendurchmesser der kreisförmigen Innenbohrung 6 des Speichergehäuses 2 ist.

Das Achsrohr 11 ist in Bezug auf die Wandstärke d und das verwendete Herstellungsmaterial derart ausgeführt, dass die auftretenden Kräfte ohne Beeinträchtigung der freien Beweglichkeit des Trennkolbens 3 bzw. der Trennkolben 3 gewährleistet ist. Hierbei ist es weiterhin erforderlich, dass die Dichtfunktion der Dichtungen 16 zu einer wirksamen Trennung der Speicherräume 8a;9a von den Druckräumen 8b;9b gewährleistet wird.

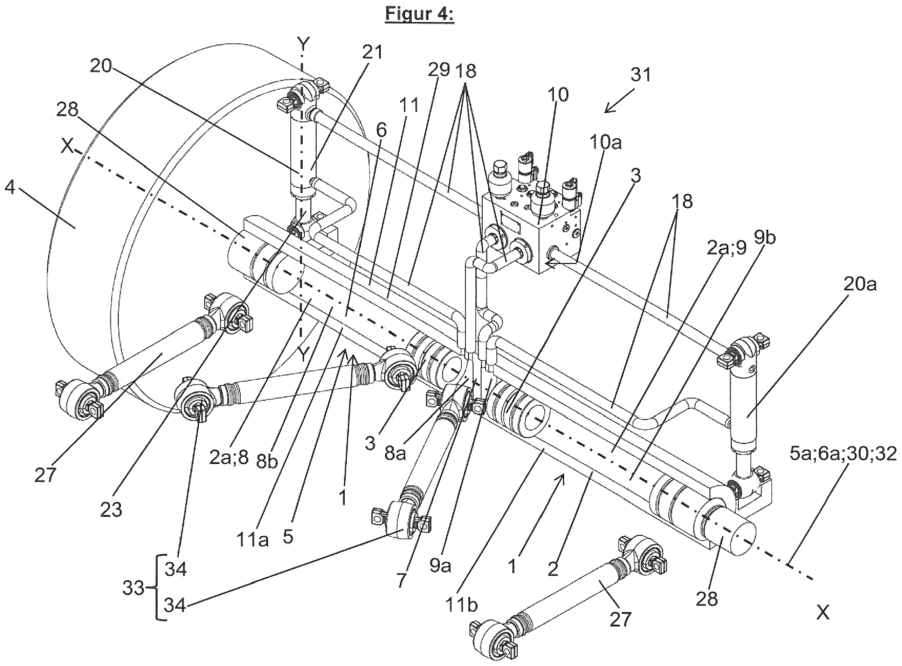

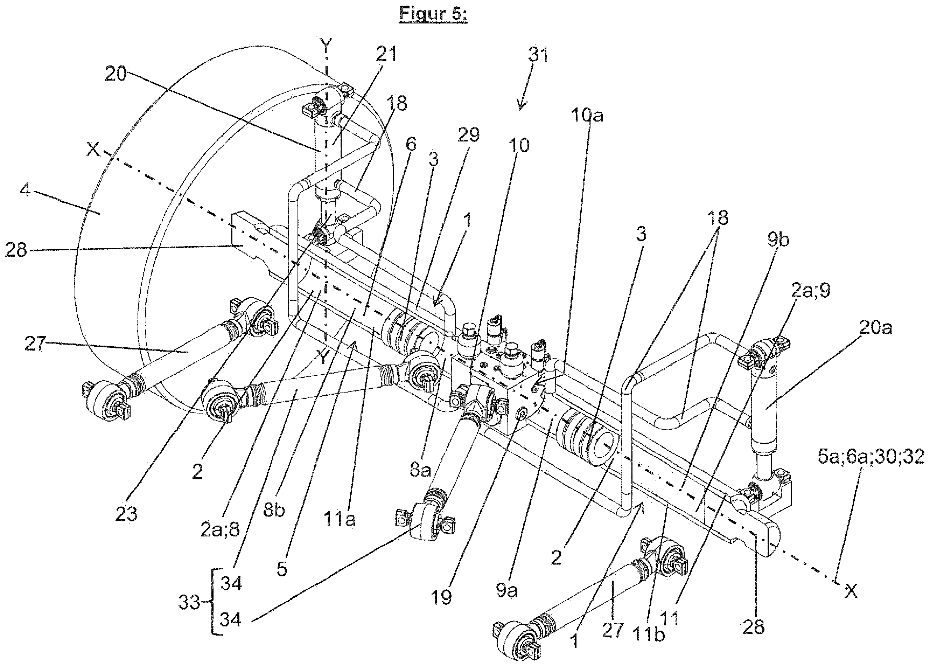

Weiterhin betrifft die Erfindung ein Fahrzeugfederungssystem unter Verwendung einer erfindungsgemäßen Fahrzeugstarrachse 31 mit zumindest einem, vorzugsweise zwei, erfindungsgemäßen Kolbenspeichern 1. Bei einem derartigen Fahrzeugfederungssystem ist pro Fahrzeugrad 4 mindestens ein hydraulischer, insbesondere doppeltwirkender Teleskop-Federzylinder 20;20a vorhanden, der einendig mit dem Achskörper 5, z.B. mit der jeweiligen Verschlusskappe 12, und andernendig mit der Fahrzeugkarosserie bzw. dem Fahrzeugaufbau mechanisch verbunden ist, siehe hierzu auch Fig. 2 und 3. Bei dem Teleskop-Federzylinder 20;20a handelt es sich um einen Hydraulikzylinder. Ein derartiger Teleskop-Federzylinder 20;20a (Fig. 3) besteht aus einem Hohlzylinder 21 und einem darin in Richtung einer Zylinderlängsachse Y-Y des Teleskop-Federzylinders 20;20a hin und her verschiebbaren Kolben 22 mit einer umfangsgemäß abgedichtet aus dem Hohlzylinder 21 nach außen geführten Kolbenstange 23. Der Kolben 22 teilt innerhalb des Hohlzylinders 21 einen Zylinderraum bzw. Kolbenraum 24 von einem die Kolbenstange 23 umschließenden Ringraum 25 ab. Der Zylinderraum 24 ist vorzugsweise oberhalb des Ringraums 25 angeordnet und die Zylinderlängsachse Y-Y ist bevorzugt vertikal ausgerichtet. Beide Räume 24;25 sind mit einem hydraulischen Medium gefüllt, wobei der Hohlzylinder 21, und zwar insbesondere der Zylinderraum 24, über eine Hydraulikverbindung, insbesondere über ein Dämpfungsglied, insbesondere einen Dämpfungsventile aufweisenden Ventilblock 10 (Fig. 4 und 5), mit den ebenfalls mit dem hydraulischen Medium gefüllten Speicherräumen 8a;9a des Kolbenspeichers 1 verbunden ist. Das hydraulische Medium innerhalb der Speicherräume 8a;9a steht unter einem Druck p₁ bzw. p₂. Der dem jeweiligen Trennkolben 3 gegenüberliegende Druckraum 8b;9b ist mit einem kompressiblen Medium gefüllt, welches unter einem Druck p₃ bzw. p₄ steht. Als kompressibles Medium wird zweckmäßigerweise ein Gas bzw. Stickstoff eingesetzt. Die Trennkolben 3 werden jeweils vom Druck bzw. Volumen der Medien in den Räumen 8a;8b:9a;9b bewegt, bis sie sich in einer statischen Lage befinden und sich ein Druckgleichgewicht eingestellt hat.

Zu der Verschaltung der Speicherräume 8a;9a und Druckräume 8b;9b und der Räume 24;25 der Teleskop-Federzylinder 20;20a dient vorteilhafterweise eine sogenannte Kreuzschaltung, die in den Fig. 4 und 5 dargestellt ist. Im Fall der Kreuzschaltung ist jeweils der Ringraum 25 eines Teleskop-Federzylinders 20;20a mit dem Speicherraum 8a;9a desjenigen Kolbenspeichers 1 hydraulisch verbunden, welcher auf derselben Seite der Mittenebene 15 liegt wie der jeweilige Teleskop-Federzylinder 20;20a. Der Zylinderraum 24 des jeweiligen Teleskop-Federzylinders 20;20a ist dagegen mit dem Speicherraum 8a;9a desjenigen Kolbenspeichers 1 hydraulisch verbunden, welcher auf der anderen Seite der Mittenebene 15 liegt wie der jeweilige Teleskop-Federzylinder 20;20a. Dies kann aber auch genau umgekehrt sein. Dadurch wird die Fahrstabilität verbessert, insbesondere das Wanken verringert.

Ist keine Kreuzverschaltung vorhanden, ist auch der Zylinderraum 24 des jeweiligen Teleskop-Federzylinders 20;20a mit dem Speicherraum 8a;9a desjenigen Kolbenspeichers 1 hydraulisch verbunden, welcher auf derselben Seite der Mittenebene 15 liegt wie der jeweilige Teleskop-Federzylinder 20; 20a.

Wie bereits erläutert ist vorzugsweise ein Ventilblock 10 vorhanden, welcher die notwendigen Dämpfungsventile enthält. Zudem sind die Teleskop-Federzylinder 20; 20a jeweils über Hydraulikleitungen 18 mit dem Ventilblock 10 verbunden. Dabei sind jeweils die Zylinderräume 24 mit dem Ventilblock 10 hydraulisch verbunden, wobei der Ventilblock 10 wiederum hydraulisch mit dem jeweiligen Speicherraum 8a;9a verbunden ist. Die Zylinderräume 24 sind also jeweils über ein Dämpfungsmittel hydraulisch mit dem jeweiligen Speicherraum 8a;9a verbunden. Vorzugsweise sind dagegen die Ringräume 25 jeweils direkt, also nicht über den Ventilblock 10, insbesondere also ohne Dämpfung, mit dem jeweiligen Speicherraum 8a;9a hydraulisch verbunden.

Gemäß einer ersten Ausführungsform (Fig. 4) ist der Ventilblock 10 getrennt von dem Achskörper 5 ausgebildet und angeordnet und ebenfalls über Hydraulikleitungen 18 mit den jeweiligen Druck- bzw. Speicherräumen 8a;9a;8b;9b verbunden.

Bevorzugt ist der Ventilkörper 10 aber Teil des Achskörpers 5 (Fig. 5). Der Ventilblock 10 ist zwischen den beiden Achsrohrabschnitten 11a;11b angeordnet und weist zwei zueinander parallele, zur Längsachse 5a senkrechte, Blockseitenflächen 10a auf. Somit teilt der Ventilblock 10 das Achsrohr 11 in die beiden Achsrohrabschnitte 11a;11b. Analog zum Zwischenwandelement 7 trennt der Ventilkörper 10 die beiden Achsrohrabschnitte 11a;11b fluidtechnisch voneinander. Folglich sind die beiden Innenbohrungsabschnitte 8;9 jeweils einendig, im Bereich der freien Achskörperenden des Achskörpers 5, durch die Achsstummel 28 und andernendig, nahe der Mittenebene 15, durch den Ventilkörper 10 medien- und druckdicht verschlossen.

Der Achskörper 5 wird vorzugsweise hergestellt aus den beiden beidseitig offenen Rohrabschnitten 11a;11b. Diese werden jeweils einendig gegen die Blockseitenflächen 10a gesetzt und an den Ventilblock 10 druck- und mediendicht angeflanscht. Die beiden Blockseitenflächen 10a begrenzen dann die beiden Innenbohrungsabschnitte 8;9. Zudem weist der Ventilblock 10 Füllöffnungen 19 auf, die an den Blockseitenflächen 10a in die beiden Innenbohrungsabschnitte 8;9 münden. Über die Füllöffnungen 19 stehen die beiden Innenbohrungsabschnitte 8;9, insbesondere die beiden Speicherräume 8a;9a hydraulisch mit dem Ventilblock 10 in Verbindung.

Erfindungsgemäß ist dargestellt, dass jeweils pro Fahrzeug-Rad 4 ein Teleskop-Federzylinder 20;20a vorhanden ist. Es liegt ebenfalls im Rahmen der Erfindung, wenn pro Fahrzeug-Rad 4 mehrere, beispielsweise zwei, Teleskop-Federzylinder 20;20a Verwendung finden. Das heißt, auf jeder Seite der Mittenebene 15 sind mehrere Teleskop-Federzylinder 20;20a vorhanden. Diese sind dann jeweils paarweise mit den zugeordneten Speicherräumen 8a;9a und Druckräumen 8b;9b verbunden. Insbesondere sind vorzugsweise alle Teleskop-Federzylinder 20;20a über Kreuz verschaltet.

Weiterhin ist dargestellt, dass pro Fahrzeug-Rad 4 auch mindestens ein Längslenker 27 einendig mit dem Achskörper 5, insbesondere den Verschlusskappen 12, mechanisch verbunden ist. Andernendig sind die Längslenker 27 mit der Fahrzeugkarrosserie verbunden (nicht dargestellt). Zudem ist ein Dreieckslenker 33 (Fig. 4 und 5) vorhanden, der in an sich bekannter Weise zur Aufnahme von Querkräften und Momenten dient. Der Dreieckslenker 33 ist zwischen den beiden Längslenkern 27 angeordnet. Im vorliegenden Fall besteht der Dreieckslenker 33 aus zwei einzelnen Schräglenkern 34, die ebenfalls jeweils einendig mit dem Achskörper 5 und andernendig mit der Fahrzeugkarrosserie bzw. dem Fahrzeugaufbau mechanisch verbunden sind. Der Dreieckslenker 33 kann aber selbstverständlich auch einteilig ausgebildet sein (nicht dargestellt).

Alternativ dazu können die beiden Fahrzeug-Räder 4 über eine Koppelstange 26 (Fig. 1 und 2), insbesondere einen Panhardstab, miteinander verbunden sein, die in an sich bekannter Weise zur Aufnahme von Querkräften dient. Die Koppelstange 26 ist einendig an dem Achskörper 5 und andernendig an der Fahrzeugkarosserie bzw. dem Fahrzeugaufbau jeweils mittels Gummimetallgelenken befestigt.

Die vorliegende Erfindung zeichnet sich durch einen sehr konstruktiv einfachen und platzsparenden Aufbau aus.

Im Rahmen der Erfindung liegt es z.B. auch, dass der Außenumfang des Achsrohres 11 einen quadratischen oder anderen Querschnitt anstelle des dargestellten kreisförmigen Querschnitts aufweist.

Des Weiteren ist die Erfindung nicht auf die dargestellte Anordnung der Speicher-und Druckräume 8a;9a;8b;9b beschränkt. Im Gegensatz zur dargestellten, bevorzugten Ausführungsform, bei der die beiden Speicherräume 8a;9a der Mittenebene 15 zugewandt sind und die beiden Druckräume 8b;9b dem freien Achskörperende des Achskörpers 5 zugewandt sind, können die Räume 8a;9a;8b;9b auch anders herum angeordnet sein.

Ferner weist der Achskörper 5 vorzugsweise zusätzlich zu den Befestigungsmitteln für die mechanische Befestigung der Teleskop-Federzylinder 20;20a, des Koppelstabes 26 bzw. der Schräglenker 34 und der Längslenker 27 auch Befestigungsmittel für die mechanische Befestigung einer Luftfeder auf.

Es liegt ebenfalls im Rahmen der Erfindung, wenn in dem als Achskörper 5 ausgebildeten Speichergehäuse 2 nur eine einzige, durchgehende kreisförmige Innenbohrung 6 ausgebildet ist, in der im Inneren ein einziger Trennkolben 3 zur Unterteilung in einen einzigen Speicherraum und einen einzigen Druckraum vorgesehen ist (nicht dargestellt). Die Fahrzeugstarrachse 31 weist in diesem Fall einen einzigen erfindungsgemäßen Kolbenspeicher 1 auf. Dies ist insbesondere der Fall, wenn ein Fahrzeug, insbesondere ein Anhänger bzw. Trailer, mehrere Fahrzeugstarrachsen 31 aufweist. Beispielsweise weisen dann nur zwei der Fahrzeugstarrachsen 31 jeweils einen einzigen Kolbenspeicher 1 auf. Dann ist pro Fahrzeugseite jeweils ein Kolbenspeicher 1 vorhanden. Dieser ist mit allen Teleskop-Federzylindern 20;20a jeweils einer Fahrzeugseite hydraulisch verbunden. Das heißt, die auf derselben Fahrzeugseite angeordneten Teleskop-Federzylinder 20;20a sind miteinander und mit einem der beiden Kolbenspeicher 1 hydraulisch verbunden. Aber auch eine Kreuzschaltung und beliebige andere Verschaltungen sind möglich.

## Patentansprüche

1. Hydropneumatischer Kolbenspeicher (1), insbesondere für Fahrzeug-Federungssysteme, umfassend ein Speichergehäuse (2) und einen im Speichergehäuse (2) in Richtung einer Gehäuselängsachse (X-X) hin- und her verschiebbar geführten Trennkolben (3), der im Speichergehäuse (2) einen Speicherraum (8a;9a) für ein hydraulisches Medium von einem ein pneumatisches Federelement enthaltenden Druckraum (8b;9b) trennt,
**dadurch gekennzeichnet, dass**
das Speichergehäuse (2) als Teil eines Achskörpers (5) einer Fahrzeugstarrachse (31) ausgebildet ist, wobei der Achskörper (5) mit einer im Querschnitt kreisförmigen Innenbohrung (6) ausgebildet ist, wobei in der Innenbohrung (6) der Trennkolben (3) geführt ist.

2. Kolbenspeicher (1) nach Anspruch 1,
**dadurch gekennzeichnet, dass**
der Trennkolben (3) im Längsschnitt gesehen die Form eines Doppel-T besitzt, wobei sein waagerechter T-Schenkel (14) in Nuten angeordnete Umfangdichtungen (16) aufweist, und sein senkrechter T-Schenkel (17) eine Kolbentrennwand bildet.

3. Kolbenspeicher (1) nach Anspruch 1 oder 2,
**dadurch gekennzeichnet, dass**
der Trennkolben (3) eine Kolbenlänge (L) besitzt, die größer/gleich dem Innendurchmesser der Innenbohrung (6) des Achskörpers (5) ist.

4. Fahrzeugstarrachse (31) mit einem Achskörper (5), der ein Achsrohr (11) mit einer im Querschnitt kreisförmigen Innenbohrung (6) und einer Rohrlängsachse (30) aufweist,
**dadurch gekennzeichnet, dass**
die Fahrzeugstarrachse (31) zumindest einen, vorzugsweise zwei, Kolbenspeicher (1) nach einem der vorhergehenden Ansprüche aufweist, wobei der Trennkolben (3) innerhalb der Innenbohrung (6) des Achsrohrs (11) in Richtung der Rohrlängsachse (30) hin- und her verschieblich geführt ist.

5. Fahrzeugstarrachse nach Anspruch 4,
**dadurch gekennzeichnet, dass**
das Speichergehäuse (2) zumindest teilweise durch das Achsrohr (11) gebildet wird.

6. Fahrzeugstarrachse nach Anspruch 4 oder 5,
**dadurch gekennzeichnet, dass**
das Speichergehäuse (2) des Kolbenspeichers (1) jeweils einen Gehäusezylinderraum (2a) aufweist, in dem der Trennkolben (3) angeordnet ist, wobei der Gehäusezylinderraum (2a) durch einen Innenbohrungsabschnitt (8;9) der Innenbohrung (6) gebildet ist.

7. Fahrzeugstarrachse (31) nach einem der Ansprüche 4 bis 6,
**dadurch gekennzeichnet, dass**
das Achsrohr (11) zwei freie Achsrohrenden aufweist und an diesen jeweils medien- und druckdicht verschlossen ist.

8. Fahrzeugstarrachse (31) nach einem der Ansprüche 4 bis 7,
**dadurch gekennzeichnet, dass**
die Fahrzeugstarrachse (31) zwei Kolbenspeicher (1) aufweist, wozu das Achsrohr (11) zwei voneinander durch ein Trennelement (7;10) fluidtechnisch getrennte Achsrohrabschnitte (11a;11b) aufweist, die in Richtung der Rohrachse (30) gesehen zueinander benachbart angeordnet sind und jeweils einen Innenbohrungsabschnitt (8;9) der Innenbohrung (6) aufweisen,
wobei innerhalb jedes Innenbohrungsabschnitts (8;9) ein Trennkolben (3) in Richtung der Rohrlängsachse (30) hin und her verschieblich geführt ist, wobei der Trennkolben (3) innerhalb des jeweiligen Innenbohrungsabschnitts (8;9) jeweils den Speicherraum (8a;9a) vom Druckraum (8b;9b) trennt.

9. Fahrzeugstarrachse (31) nach Anspruch 8,
**dadurch gekennzeichnet, dass**
die beiden Achsrohrabschnitte (11a;11b) endseitig jeweils medien- und druckdicht verschlossen sind.

10. Fahrzeugstarrachse (31) nach Anspruch 8 oder 9,
**dadurch gekennzeichnet, dass**
das Trennelement ein Zwischenwandelement (7) ist, welches die beiden Innenbohrungsabschnitte (8;9) fluidtechnisch voneinander trennt.

11. Fahrzeugstarrachse (31) nach Anspruch 8 oder 9,
**dadurch gekennzeichnet, dass**
der Achskörper (5) als das Trennelement einen Dämpfungsventile aufweisenden Ventilblock (10) aufweist, wobei der Ventilblock (10) zwischen den beiden Achsrohrabschnitten (11a;11b) angeordnet ist und mit diesen jeweils fest verbunden ist, wobei
der Ventilblock (10) vorzugsweise zwei zueinander parallele, zur Rohrlängsachse (30) senkrechte, Blockseitenflächen (10a) aufweist, welche die beiden Innenbohrungsabschnitte (8;9) abschließen.

12. Fahrzeugstarrachse (31) nach Anspruch 11,
**dadurch gekennzeichnet, dass**
der Ventilblock (10) mit den beiden Speicherräumen (8a;9a) hydraulisch verbunden ist, wobei der Ventilblock (10) vorzugsweise Füllöffnungen (19) aufweist, die an den Blockseitenflächen (10a) in die beiden Innenbohrungsabschnitte (8;9) münden.

13. Fahrzeugfederungssystem, umfassend
a) eine Fahrzeugstarrachse (31) mit einem Achskörper (5),
b) mindestens einen Teleskop-Federzylinder (20;20a), wobei
b₁) der Teleskop-Federzylinder (20;20a) einen Hohlzylinder (21) umfasst, wobei in dem Hohlzylinder (21) in Richtung seiner Zylinderlängsachse (Y-Y) ein Kolben (22) verschiebbar geführt ist, der eine umfangsgemäß abgedichtete, aus dem Hohlzylinder (21) herausgeführte Kolbenstange (23) aufweist, wobei der Kolben (22) einen mit einem hydraulischen Medium befüllten Zylinderraum (24) von einem die Kolbenstange (23) umschließenden, vorzugsweise mit einem hydraulischen Medium befüllten, Ringraum (25) abtrennt, und
b₂) wobei der Teleskop-Federzylinder (20;20a) einendig mit dem Achskörper (5) mechanisch verbunden ist,
sowie
c) mindestens einen, insbesondere hydropneumatischen, Kolbenspeicher (1),
**dadurch gekennzeichnet, dass**
die Fahrzeugstarrachse (31) gemäß einem der Ansprüche 4 bis 12 ausgebildet ist.

14. Fahrzeug-Federungssystem nach Anspruch 13,
**dadurch gekennzeichnet, dass**
an jedem Achskörperende des Achskörpers (5) mindestens ein Teleskop-Federzylinder (20;20a) angeordnet ist.

15. Fahrzeug-Federungssystem nach Anspruch 14,
**dadurch gekennzeichnet, dass**
die Fahrzeugstarrachse (31) nach Anspruch 8 ausgebildet ist und die beiden Speicherräume (8a;9a) der beiden Kolbenspeicher (1) über eine Kreuzschaltung mit den Räumen (24;25) der beiden Teleskop-Federzylinder (20;20a) hydraulisch verbunden sind.

16. Fahrzeug-Federungssystem nach Anspruch 15,
**dadurch gekennzeichnet, dass**
der Ringraum (25) des ersten der beiden Teleskop-Federzylinder (20) mit dem Speicherraum (8a) des ersten der beiden Kolbenspeicher (1) hydraulisch verbunden ist und der Zylinderraum (24) des ersten Teleskop-Federzylinders (20) mit dem Speicherraum (9a) des zweiten der beiden Kolbenspeicher (1) hydraulisch verbunden ist, und
der Ringraum (25) des zweiten der beiden Teleskop-Federzylinder (20a) mit dem Speicherraum (9a) des zweiten Kolbenspeichers (1) hydraulisch verbunden ist und der Zylinderraum (24) des zweiten Teleskop-Federzylinders (20a) mit dem Speicherraum (8a) des ersten Kolbenspeichers (1) hydraulisch verbunden ist.

## Claims

1. Hydropneumatic piston accumulator (1), in particular for vehicle suspension systems, comprising an accumulator housing (2) and a separating piston (3) which is guided in the accumulator housing (2) in such a way as to be able to move back and forth in the direction of a housing longitudinal axis (X-X) and which, in the accumulator housing (2), separates an accumulator chamber (8a; 9a) for a hydraulic medium from a pressure chamber (8b; 9b) containing a pneumatic spring element, **characterized in that**
the accumulator housing (2) is configured as part of an axle beam (5) of a rigid vehicle axle (31), wherein the axle beam (5) is configured with an internal bore (6) of circular cross-section, wherein the separating piston (3) is guided in the internal bore (6).

2. Piston accumulator (1) according to claim 1,
**characterized in that**
the separating piston (3), as seen in longitudinal section, has the shape of a doubleT, wherein the horizontal bar (14) of the T has circumferential seals (16) arranged in grooves, and the vertical bar (17) of the T forms a separating wall of the piston.

3. Piston accumulator (1) according to claim 1 or 2,
**characterized in that**
the separating piston (3) has a piston length (L) that is greater than/equal to the internal diameter of the internal bore (6) of the axle beam (5).

4. Rigid vehicle axle (31) comprising an axle beam (5) which has an axle tube (11) with an internal bore (6) of circular cross-section and a tube longitudinal axis (30),
**characterized in that**
the rigid vehicle axle (31) has at least one, preferably two piston accumulators (1) according to any of the preceding claims, wherein the separating piston (3) is guided within the internal bore (6) of the axle tube (11) in such a way as to be able to move back and forth in the direction of the tube longitudinal axis (30).

5. Rigid vehicle axle according to claim 4,
**characterized in that**
the accumulator housing (2) is formed at least in part by the axle tube (11).

6. Rigid vehicle axle according to claim 4 or 5,
**characterized in that**
the accumulator housing (2) of the piston accumulator (1) has in each case a housing cylindrical chamber (2a) in which the separating piston (3) is arranged, wherein the housing cylindrical chamber (2a) is formed by an internal bore portion (8; 9) of the internal bore (6).

7. Rigid vehicle axle (31) according to any of claims 4 to 6,
**characterized in that**
the axle tube (11) has two free axle tube ends and is closed at each of said ends in a media-tight and pressure-tight manner.

8. Rigid vehicle axle (31) according to any of claims 4 to 7,
**characterized in that**
the rigid vehicle axle (31) has two piston accumulators (1), for which purpose the axle tube (11) has two axle tube portions (11a; 11b) which are fluidically separated from one another by a separating element (7; 10) and which are arranged adjacent to one another as seen in the direction of the tube axis (30) and each have an internal bore portion (8; 9) of the internal bore (6),
wherein a separating piston (3) is guided within each internal bore portion (8; 9) in such a way as to be able to move back and forth in the direction of the tube longitudinal axis (30), wherein the separating piston (3) within the respective internal bore portion (8; 9) in each case separates the accumulator chamber (8a; 9a) from the pressure chamber (8b; 9b).

9. Rigid vehicle axle (31) according to claim 8,
**characterized in that**
the two axle tube portions (11a; 11b) are closed at each end in a media-tight and pressure-tight manner.

10. Rigid vehicle axle (31) according to claim 8 or 9,
**characterized in that**
the separating element is an intermediate wall element (7) which fluidically separates the two internal bore portions (8; 9) from one another.

11. Rigid vehicle axle (31) according to claim 8 or 9,
**characterized in that**
the axle beam (5) has as the separating element a valve block (10) having damping valves, wherein the valve block (10) is arranged between the two axle tube portions (11a; 11b) and is fixedly connected to each of said axle tube portions, wherein
the valve block (10) preferably has two mutually parallel block side faces (10a) which are perpendicular to the tube longitudinal axis (30) and which close off the two internal bore portions (8; 9).

12. Rigid vehicle axle (31) according to claim 11,
**characterized in that**
the valve block (10) is hydraulically connected to the two accumulator chambers (8a; 9a), wherein the valve block (10) preferably has filling openings (19) which open at the block side faces (10a) into the two internal bore portions (8; 9).

13. Vehicle suspension system, comprising
a) a rigid vehicle axle (31) having an axle beam (5),
b) at least one telescopic suspension cylinder (20; 20a), wherein
b₁) the telescopic suspension cylinder (20; 20a) comprises a hollow cylinder (21), wherein a piston (22) is guided in the hollow cylinder (21) in such a way as to be able to move in the direction of the cylinder longitudinal axis (Y-Y) thereof, said piston having a circumferentially sealed piston rod (23) which is led out of the hollow cylinder (21), wherein the piston (22) separates a cylinder chamber (24), which is filled with a hydraulic medium, from an annular chamber (25) which surrounds the piston rod (23) and is preferably filled with a hydraulic medium, and
b₂) wherein the telescopic suspension cylinder (20; 20a) is mechanically connected at one end to the axle beam (5),
and
c) at least one piston accumulator (1), in particular a hydropneumatic piston accumulator,
**characterized in that**
the rigid vehicle axle (31) is configured according to any one of claims 4 to 12.

14. Vehicle suspension system according to claim 13,
**characterized in that**
at least one telescopic suspension cylinder (20; 20a) is arranged at each axle beam end of the axle beam (5).

15. Vehicle suspension system according to claim 14,
**characterized in that**
the rigid vehicle axle (31) is configured according to claim 8 and the two accumulator chambers (8a; 9a) of the two piston accumulators (1) are hydraulically connected to the chambers (24; 25) of the two telescopic suspension cylinders (20; 20a) via a cross-connection.

16. Vehicle suspension system according to claim 15,
**characterized in that**
the annular chamber (25) of the first of the two telescopic suspension cylinders (20) is hydraulically connected to the accumulator chamber (8a) of the first of the two piston accumulators (1) and the cylinder chamber (24) of the first telescopic suspension cylinder (20) is hydraulically connected to the accumulator chamber (9a) of the second of the two piston accumulators (1), and
the annular chamber (25) of the second of the two telescopic suspension cylinders (20a) is hydraulically connected to the accumulator chamber (9a) of the second piston accumulator (1) and the cylinder chamber (24) of the second telescopic suspension cylinder (20a) is hydraulically connected to the accumulator chamber (8a) of the first piston accumulator (1).

## Revendications

1. Accumulateur à piston (1) hydropneumatique, en particulier pour des systèmes de suspension de véhicule, comprenant un boîtier d'accumulateur (2) et un piston de séparation (3) guidé de manière mobile en va et vient dans le boîtier d'accumulateur (2) en direction d'un axe longitudinal de boîtier (X-X) qui sépare dans le boîtier d'accumulateur (2) un espace d'accumulateur (8a ; 9a) pour un agent hydraulique d'un espace de pression (8b ; 9b) contenant un élément de ressort pneumatique,
**caractérisé en ce que**
le boîtier d'accumulateur (2) est réalisé sous la forme d'une partie d'un corps d'essieu (5) d'un essieu rigide de véhicule (31), dans lequel le corps d'essieu (5) est réalisé avec un perçage intérieur (6) de section transversale circulaire, dans lequel le piston de séparation (3) est guidé dans le perçage intérieur (6).

2. Accumulateur à piston (1) selon la revendication 1,
**caractérisé en ce que**
le piston de séparation (3) possède vu en coupe longitudinale la forme d'un double T, dans lequel sa branche en T (14) horizontale présente des garnitures périphériques (16) agencées dans des rainures, et sa branche en T (17) perpendiculaire forme une paroi de séparation de piston.

3. Accumulateur à piston (1) selon la revendication 1 ou 2,
**caractérisé en ce que**
le piston de séparation (3) possède une longueur de piston (L) qui est supérieure/égale au diamètre intérieur du perçage intérieur (6) du corps d'essieu (5).

4. Essieu rigide de véhicule (31) avec un corps d'essieu (5) qui présente un tube d'essieu (11) avec un perçage intérieur (6) circulaire en section transversale et un essieu longitudinal tubulaire (30),
**caractérisé en ce que**
l'essieu rigide de véhicule (31) présente au moins un accumulateur de piston (1), de préférence deux, selon l'une des revendications précédentes, dans lequel le piston de séparation (3) est guidé de manière mobile en va et vient à l'intérieur du perçage intérieur (6) du tube d'essieu (11) en direction de l'axe longitudinal de tube (30).

5. Essieu rigide de véhicule selon la revendication 4,
**caractérisé en ce que**
le boîtier d'accumulateur (2) est formé au moins partiellement par le tube d'essieu (11).

6. Essieu rigide de véhicule selon la revendication 4 ou 5,
**caractérisé en ce que**
le boîtier d'accumulateur (2) de l'accumulateur à piston (1) présente respectivement un espace de cylindre de boîtier (2a), dans lequel le piston de séparation (3) est agencé, dans lequel l'espace de cylindre de boîtier (2a) est formé par une section de perçage intérieur (8 ; 9) du perçage intérieur (6).

7. Essieu rigide de véhicule (31) selon l'une des revendications 4 à 6,
**caractérisé en ce que**
le tube d'essieu (11) présente deux extrémités de tube d'essieu libres et est fermé sur celles-ci respectivement de manière étanche à l'agent et la pression.

8. Essieu rigide de véhicule (31) selon l'une des revendications 4 à 7, **caractérisé en ce que**
l'essieu rigide de véhicule (31) présente deux accumulateurs à piston (1), pour lesquels le tube d'essieu (11) présente deux sections de tube d'essieu (11a; 11b) séparées fluidiquement l'une de l'autre par un élément de séparation (7 ; 10) qui sont agencées vu en direction de l'axe de tube (30) de manière contiguë l'une à l'autre et présentent respectivement une section de perçage intérieur (8 ; 9) du perçage intérieur (6),
dans lequel à l'intérieur de chaque section de perçage intérieur (8 ; 9) un piston de séparation (3) est guidé de manière mobile en va et vient en direction de l'axe longitudinal de tube (30), dans lequel le piston de séparation (3) sépare à l'intérieur de la section de perçage intérieur (8 ; 9) respective respectivement l'espace d'accumulateur (8a ; 9a) de l'espace de pression (8b ; 9b).

9. Essieu rigide de véhicule (31) selon la revendication 8,
**caractérisé en ce que**
les deux sections de tube d'essieu (11a ; 11b) sont fermées de manière étanche à l'agent et à la pression côté extrémité respectivement.

10. Essieu rigide de véhicule (31) selon la revendication 8 ou 9,
**caractérisé en ce que**
l'élément de séparation est un élément de paroi intermédiaire (7) qui sépare fluidiquement l'une de l'autre les deux sections de perçage intérieur (8 ; 9).

11. Essieu rigide de véhicule (31) selon la revendication 8 ou 9,
**caractérisé en ce que**
le corps d'essieu (5) présente comme élément de séparation un bloc de soupape (10) présentant des soupapes d'amortissement, dans lequel le bloc de soupape (10) est agencé entre les deux sections de tube d'essieu (11a ; 11b) et est raccordé fixement respectivement à celles-ci, dans lequel
le bloc de soupape (10) présente de préférence deux surfaces latérales de bloc (10a) perpendiculaires à l'axe longitudinal de tube (30), parallèles l'une à l'autre, qui terminent les deux sections de perçage intérieur (8 ; 9).

12. Essieu rigide de véhicule (31) selon la revendication 11,
**caractérisé en ce que**
le bloc de soupape (10) est raccordé hydrauliquement aux deux espaces d'accumulateur (8a ; 9a), dans lequel le bloc de soupape (10) présente de préférence des ouvertures de remplissage (19) qui débouchent sur les surfaces latérales de bloc (10a) dans les deux sections de perçage intérieur (8 ; 9).

13. Système de suspension de véhicule, comprenant
a) un essieu rigide de véhicule (31) avec un corps d'essieu (5),
b) au moins un cylindre de ressort télescopique (20 ; 20a), dans lequel
b₁) le cylindre de ressort télescopique (20 ; 20a) comporte un cylindre creux (21), dans lequel dans le cylindre creux (21) en direction de son axe longitudinal de cylindre (Y-Y) un piston (22) est guidé de manière mobile, lequel présente une tige de piston (23) guidée hors du cylindre creux (21) rendue étanche sur la périphérie, dans lequel le piston (22) sépare un espace de cylindre (24) rempli d'un agent hydraulique d'un espace annulaire (25) entourant la tige de piston (23), rempli de préférence d'un agent hydraulique, et
b₂) dans lequel le cylindre de ressort télescopique (20 ; 20a) est raccordé mécaniquement sur une extrémité au corps d'essieu (5),
ainsi que
c) au moins un accumulateur de piston (1), en particulier hydropneumatique,
**caractérisé en ce que**
l'essieu rigide de véhicule (31) est réalisé selon l'une des revendications 4 à 12.

14. Système de suspension de véhicule selon la revendication 13,
**caractérisé en ce que**
au moins un cylindre de ressort télescopique (20 ; 20a) est agencé sur chaque extrémité de corps d'essieu du corps d'essieu (5).

15. Système de suspension de véhicule selon la revendication 14,
**caractérisé en ce que**
l'essieu rigide de véhicule (31) est réalisé selon la revendication 8 et les deux espaces d'accumulateur (8a ; 9a) des deux accumulateurs à piston (1) sont raccordés hydrauliquement par un montage en croix aux espaces (24 ; 25) des deux cylindres de ressort télescopiques (20 ; 20a).

16. Système de suspension de véhicule selon la revendication 15,
**caractérisé en ce que**
l'espace annulaire (25) du premier des deux cylindres de ressort télescopiques (20) est raccordé hydrauliquement à l'espace d'accumulateur (8a) du premier des deux accumulateurs à piston (1) et l'espace de cylindre (24) du premier cylindre de ressort télescopique (20) est raccordé hydrauliquement à l'espace d'accumulateur (9a) du second des deux accumulateurs à piston (1), et
l'espace annulaire (25) du second des deux cylindres de ressort télescopiques (20a) est raccordé hydrauliquement à l'espace d'accumulateur (9a) du second accumulateur à piston (1) et l'espace de cylindre (24) du second cylindre de ressort télescopique (20a) est raccordé hydrauliquement à l'espace d'accumulateur (8a) du premier accumulateur à piston (1).
